# EUROPEAN PATENT APPLICATION

(11) **EP 4 560 596 A1**
(43) Date of publication of application: **28.05.2025**
(21) Application number: 23212282.0
(22) Date of filing: 27.11.2023
(51) Int. Cl.: G07F 19/00, G06Q 20/06, G06Q 20/36, G06Q 20/34

(54) **A HARDWARE TOKEN TRANSACTION UNIT MANAGING DEVICE AND A METHOD**

(71) Applicant: Giesecke+Devrient advance52 GmbH, 81677 München (DE)
(72) Inventor: ALBASHA, Abbas Ahmed Abdullah, 81677 München (DE)
(74) Representative: Ter Meer Steinmeister & Partner

(57) **Abstract**

The invention relates to a hardware token transaction unit managing device (100) within a token-based electronic transaction system (TS), comprising a hardware token transaction unit storage (200) configured for physically storing at least one new and/or used hardware token transaction unit, a hardware token transaction unit input/ output (300) configured for dispensing a new hardware token transaction unit and/or for receiving a used hardware token transaction unit, and a local token transaction unit (400) comprising one or more tokens of the token-based electronic transaction system, the local token transaction unit (400) configured for managing of one or more tokens of the at least one new or used hardware token transaction unit.

## Description

The invention relates to a hardware token transaction unit managing device within a token-based electronic transaction system. The invention also relates to a method, preferably in a hardware token transaction unit managing device.

In a conventional electronic transaction system, i.e. a system executing electronic transactions, wherein electronic transactions, such as electronic payment transactions, can be made on a token-based model, a use of ATMs is known in general. ATMs are configured for receiving cash money from the user and providing this money to a bank account of the user, and are configured for dispensing cash money from a bank account of the user to the user.

A user's onboarding process, i.e. for obtaining a user's bank account or a CBDC wallet, in conventional electronic transaction systems is linked to a high personal and technical effort. For instance, for such an onboarding, a user has to visit a branch of a financial service provider, FSP, (a bank) during the working hours and days. Loading of money into a bank account, loading of tokens into CBDC wallet, and the withdrawing/ dispensing of cash from a bank account requires needs authorization and identification, which for unbanked users always implies a visit of the bank during working hours and days.

In modern onboarding processes or while using an existing bank account, there is still a need to have an authorized access to a handheld device like a mobile phone or a personalized smart card providing access to the existing bank account. Therefore, modern ATMs etc. inevitably need a reliable access to electricity and broadband to access and transact with the bank account. Hence, these modern ATMs only work properly and are mostly arranged in regions of the world where the reliable access to electricity and broadband is provided. However, in regions of the world, where the reliable access to electricity and broadband is not provided, and/or is not ensured and/or is unstable, ATMs and bank branches are rare such that people in these regions are excluded from electronic transaction systems. This applies, for example, to unbanked users, i.e. user without having an bank account, in a country with a low smartphone penetration rate, with feature phones prevailing, in a rural area with interrupted access to electricity and broadband etc..

There is a need for providing a system in the electronic transaction system allowing an unbanked user (or not having a CBDC wallet) without an handheld device and/or in an area without an reliable access to electricity and broadband to onboard a bank account respectively take part in the electronic transaction system. There is also a need for providing a system in the electronic transaction system allowing a banked user to most-convenient receive access to his bank account, and/or his CBDC wallet (hosted or not hosted) for flexible participation in the electronic transaction system.

The above-identified objectives are solved with the features of the independent patent claims. Further advantageous embodiments are described in the dependent patent claims.

In an aspect of the present invention, there is provided a hardware token transaction unit managing device within a token-based electronic transaction system. The hardware token transaction unit managing device comprises a hardware token transaction unit storage configured for physically storing at least one new and/or used hardware token transaction unit, a hardware token transaction unit input/output configured for dispensing a new hardware token transaction unit and/or for receiving a used hardware token transaction unit, and a local token transaction unit comprising one or more tokens of the token-based electronic transaction system. The local token transaction unit is configured for managing of one or more tokens of the at least one new or used hardware token transaction unit.

The hardware token transaction unit managing device may represent any device within a token-based electronic transaction system, which is configured for managing, i.e. dispensing/issuing, receiving and/or storing one or more hardware token transaction units. Managing of hardware token transaction unit may also imply a modifying of one or more tokens residing in the hardware token transaction unit. In this context, the term "modifying" may mean that a token stored on the hardware token transaction unit is changed e.g. by a merge- or split- or switch-function (command, operation) etc., as for instance introduced in WO 2020 / 212 331 A1, where tokens are stored in token transaction units to be directly exchanged between users within the electronic transaction system. Managing of hardware token transaction unit may also imply a registering of one or more tokens residing in the hardware token transaction unit for security-, verification- and registration-purposes. For that registering a central token reference register stores token references of all valid tokens without knowing the tokens itself. So, the user can check validity of a received token with dedicated requests send to the token reference register. The token reference register only stores token references of the corresponding token. Tokens can be further modified by each user of the token transaction system, e.g., ownership of tokens can be switched from one user to another user (SWITCH modification), tokens can be split into plural tokens, e.g., for obtaining a token with a reduced monetary value (SPLIT modification) and/or plural tokens can be merged to a single token, e.g., for obtaining a token with a higher monetary value (MERGE modification). Digital signatures are used to further enhance the security.

The hardware token transaction unit managing device may be configured to operate in an offline mode, i.e. in a mode in which a network connection to the token-based electronic transaction system is switched-off, disabled, and/or disconnected. For instance, the hardware token transaction unit managing device may be an automated teller machine, ATM, , an apparatus or an equipment, but is not limited thereto.

The hardware token transaction unit may represent any physical unit which can be provided respectively dispensed or issued by the hardware token transaction managing device via a hardware token transaction unit input/ output to a user. Additionally, the hardware token transaction unit can be received via a hardware token transaction unit input/output by the hardware token transaction managing device. For instance, the hardware token transaction unit may be a smart card or another suitable hardware data carrier but is not limited thereto. The hardware token transaction unit may include a data storage for storing one or more token as a token-based monetary value, i.e. the token may comprise a data element representing monetary value of that token. Additionally, personal information respectively personal data, e.g. the full name, the birth date, the passport number etc., of the user being gathered/collected during the registration (onboarding) of the user may be stored in plain or in encrypted form in the data storage of the hardware token transaction unit. The personal information respectively data may be provided to the hardware token transaction unit managing device by a manual input via an input unit, such as keyboard, touchpad, touchscreen by the user or by a computer-based input e.g. via an artificial intelligence based document scanning and data detection proceeding but is not limited thereto. This enables that a user can be verified also for transaction that require spatially spaced hardware token transaction unit managing devices. Additionally, a hardware token transaction unit verification element, like a code, a certificate, a key etc., can be stored at the data storage of the hardware token transaction unit such that the hardware token transaction unit managing device, in particular the hardware token transaction unit input/output can proof/check if a hardware token transaction unit is provided respectively issued by a trustful other hardware token transaction unit managing device or by a trustful partner.

The hardware token transaction unit storage may represent any device being configured for physically storing at least one hardware token transaction unit. For instance, the hardware token transaction unit storage may be a box, a container, or a chamber for holding/receiving/collecting of new and/or used hardware token transaction units. In this context, the hardware token transaction unit storage may comprise a magazine, a depot and/or a stack including a plurality of new hardware token transaction units to be dispensed/issued. In this context, the hardware token transaction unit storage may additionally or alternatively comprise another magazine and/or a collecting chamber for physically storing used hardware token transaction units. The term "new" may represent that the hardware token transaction unit is unused by a user and is to be dispended/issued to the user for the first time by the hardware token transaction unit input/ output. The term "used" may represent that the hardware token transaction unit is provided by the user to the hardware token transaction unit managing device via the hardware token transaction unit input/output for holding, returning, removing, or destroying of the hardware token transaction unit.

The term "physically storing" may represent that the at least one new hardware token transaction unit may be temporarily, i.e. until it is used or dispensed to the user, stored in the magazine, etc. and/or that at least one used hardware token transaction unit may be temporarily, i.e. until it is removed for destruction, stored in the collecting chamber etc.

The hardware token transaction unit input/ output may represent any unit being configured for dispensing a new hardware token transaction unit and/or for receiving a used hardware token transaction unit. The hardware token transaction unit input/output may be physically coupled to the hardware token transaction unit storage such that a new hardware token transaction unit can be provided/transported from the hardware token transaction unit storage to the hardware token transaction unit input/output and such that a used hardware token transaction unit can be provided/transported from the hardware token transaction unit input/output to the hardware token transaction unit storage. In other words, the hardware token transaction input/output is configured for issuing a new hardware token transaction unit to the user, preferably in response to transferring a token-based monetary value as token from the local token transaction unit to the new hardware token transaction unit, and/or the hardware token transaction input/output is configured for receiving a used/to-be-returned hardware token transaction unit from the user and in response thereto transferring a token-based monetary value from the used/to-be-returned hardware token transaction unit to the local token transaction unit. Further, the hardware token transaction unit input/ output may comprise a hardware token transaction unit holding element configured for temporarily holding the used hardware token transaction unit and configured for storing/writing, reading and/or deleting data on or from the used hardware token transaction unit. After the holding, the hardware token transaction unit holding element is configured for returning the hardware token transaction unit back to the user or for providing the hardware token transaction unit to the hardware token transaction unit storage. In other words, the hardware token transaction input/ output unit is configured for temporarily receiving a hardware token transaction unit from the user and in response thereto transferring a token-based monetary value from the hardware token transaction unit to the local token transaction unit or vice versa. In this context, the hardware token transaction unit holding element may comprise a hardware token transaction unit holding device, a data writing device, a data reading device and/or a data deletion device but is not limited thereto. The hardware token transaction unit holding element may be communicatively coupled to the local token transaction unit but is not limited thereto. For instance, the hardware token transaction unit input/output may be a unit including the hardware token transaction unit holding element and comprise a hardware token transaction unit feeder and a hardware token transaction unit dispenser but is not limited thereto. The hardware token transaction unit feeder and the hardware token transaction unit dispenser may be included in the same unit and may be accessible from the outside of the hardware token transaction unit managing device.

The term "token", also named as digital asset, electronic coin, coin data set, may represent any digital asset, in particular a digital currency, preferably a central bank digital currency, short CBDC, Stablecoin or Commercial Bank Money Token. These tokens are issued and deleted by an issuing unit of a token transaction system, such as an issuing authority, or a central bank unit or a commercial bank unit, hereinafter also referred to as secure token issuing unit. Each token may comprise at least a monetary value and a token-individual secret, such as a private key part of a cryptographic key pair as data elements.

The local token transaction unit may be referred to as a wallet, which is a digital container that stores information used to make payments, redeem rewards, or access other services. The local token transaction unit may be used to locally manage of tokens (CBDC) within the hardware token transaction unit managing device itself, to modify these tokens and to register the token at a token reference register. The local token transaction units can be software-based or hardware-based and can be used to store a variety of information, including tokens, asset values, and other relevant data. The local token transaction unit can be implemented as a software application, or as a hardware device, such as a USB drive or a smartcard / chipcard within the hardware token transaction unit managing device.

The local token transaction unit may represent any unit being configured for managing of the one or more tokens of the at least one hardware token transaction unit. In this context, the local token transaction unit, also referred to as secure wallet, may represent any secure token management unit; token wallet; and/or device wallet may be used to locally manage, i.e. token in a local token transaction unit itself and/or to modify, e.g. split, merge, switch etc., the tokens and to register the token in the electronic token transaction system via token references as described above. A token reference may comprise at least the monetary value (of the token it references to) and a token-individual reference, such as a public key part (corresponding to the private key part of the token) of the cryptographic key pair as data elements.

The local token transaction unit may further be configured for generating one or more tokens that have a monetary value which is based on a cash-based monetary value or an account-based monetary value and vice versa. In this context, the term "generating" may represent that the local token transaction unit provides respectively generates a new token or modifies an existing token. In other words, the monetary value based on the cash-based monetary value and//or an account-based monetary value may be converted into a token having a monetary value that is identical to the cash-based monetary value and//or an account-based monetary value (to avoid the generating of monetary value. The term "cashed-based monetary value" and the term "account-based monetary value" may represent the way or transmission method how the monetary value of the token is provided. In this context, the term "cashed-based monetary value" may represent that the monetary value of the token is provided, i.e. increased or decreased, by depositing or issuing cash money into the hardware token transaction unit managing device.

In this context, the term "transferring a token" is related to a token exchange between two token transaction units, where the token is provided from a first token transaction unit to a second token transaction, the token transaction unit being one of the local token transaction unit, the new token transaction unit, or the used token transaction unit. So, monetary value in the form of a token changes from one token transaction unit to another one.

In this context, the term "converting into token" is related to a change of the monetary value from one form into another form, wherein a form is either token-based, or account-based or cash-based. So, the monetary value remains within the same unit during the converting step.

The hardware token transaction unit managing device may comprise a cash output unit. The cash output unit may be configured for dispensing/issuing cash-based monetary values from the hardware token transaction unit managing device to the at least one user in response to the transferring, preferably modifying or redeeming of at least one token from the user's hardware token transaction unit to the local token transaction unit.

Redeeming of tokens is different from deleting of tokens. While deleting of tokens can preferably be performed only by a central instance, such as an issuing unit, e.g. a central bank, the redeeming of tokens can be performed by the local transaction unit, e.g. when transferring monetary value from a token to a cash-based or account-based monetary value.

Additionally or alternatively, the hardware token transaction unit managing device may comprise a cash input unit. The cash input unit may be configured for receiving cash-based monetary value from the user and in return transferring, preferably by modifying or storing, of at least one token to the user's hardware token transaction unit as the token-based monetary value from the local token transaction unit. The term "account-based monetary value" may represent that the monetary value of the token is provided, i.e. increased or decreased, by depositing or issuing money from a bank account of the user from or to the hardware token transaction unit managing device.

The hardware token transaction unit managing device may comprise a communication unit. The communication unit may be configured for receiving account-based monetary value from a user's account, in particular bank account of the user, and in return transferring, preferably by modifying or storing, of at least one token to the user's hardware token transaction unit as the token-based monetary value from the local token transaction unit. The communication unit may be configured for sending account-based monetary value to a user's account, i.e. bank account of the user, in response to transferring, preferably by modifying or redeeming, of at least one token from the user's hardware token transaction unit as the token-based monetary value to the local token transaction unit. For instance, the communication unit may be a Point Of Sale, POS, terminal including a near field communication, NFC, reader and/or a QR code reader but is not limited thereto. For instance, the communication unit may be a network connection unit, such as a mobile communication modem and/or another data interface configured to establish and provide a connection to a data network, e.g. for communication with the bank, hosting the bank account and/or an online wallet for CBDC but is not limited thereto. The communication unit may be a software- and/or a computer program code being implemented in the device.

The local token transaction unit may be further configured, when the at least one user is registered or verified, for transferring at least one token to a user's hardware token transaction unit or transferring at least one token from a user's hardware token transaction unit. The term "local" of the local token transaction unit may represent that the local token transaction unit is arranged/located within, i.e. internal, the hardware token transaction unit managing device.

By providing/dispensing a hardware token transaction unit to the user and based on the included local token transaction unit, a hardware token transaction unit managing device can be provided in the electronic transaction system allowing a user without a handheld device and/or in an area without an reliable access to electricity and broadband to onboard a bank account respectively take part in an electronic transaction system.

The account-based monetary value may be hosted and/or managed by a service provider unit and may be viewed, transferred, loaded, unloaded by accessing a user's account. Therefore, a user must be known to the service provider unit. The service provider unit may be a participant in the electronic transaction system that offers services used by service consumers. This may be an e-commerce platform that facilitates online sales, a payment gateway that processes digital payments, a bank that enables electronic token transfers, or any other technical entity that provides the infrastructure or services necessary to carry out electronic transactions. The service provider unit may respond to the service user's request and may perform the necessary actions to complete any transaction.

A token is a unit of data or a digital asset or electronic coin representing a unit of value, a digital currency, preferably a central bank digital currency (CBDC), a right to access a service, or a record of ownership. A token representing a digital currency may be issued and deleted by a unit of the transaction system, such as an issuing authority or a central bank unit or a commercial bank unit, hereinafter referred to as a token issuing unit, that is in the present document a secure token issuing unit. A token may be a digital resource, a digital certificate, a single record in a database, and may be used to pay for (purchase) goods and services, to participate in voting or other governance processes, or to receive rewards.

For managing the tokens, such as performing token transactions and storing the tokens, secure token transaction units, also known as token management units, are used. Herein, the token transaction units are hardware transaction units as described above.

The local token transaction unit and the hardware token transaction unit each may comprise a control means, such as a processor, a microprocessor or a microcontroller. The control means may generally be responsible for ensuring transaction integrity, managing computational tasks and facilitating secure communication between the transaction units.

The local token transaction unit and the hardware token transaction unit each may comprise a communication interface adapted to enable bi-directional data communication between the hardware token transaction unit and the local token transaction unit within the hardware token transaction unit managing device for managing the token transfer. The local token transaction unit and the hardware token transaction unit each may comprise a secure memory for storing data. In particular, the secure communication interface enables the token transaction unit to interact with other token transaction units (e.g. the local token transaction unit of the hardware token transaction unit managing device) in a secure manner, thereby enhancing data security during transactions. The benefit is enhanced system security, minimizing potential breaches during data exchange. Especially, the secure memory maintains data integrity by protecting it from unauthorized access or modifications. The benefit is a robust system that can reliably store and retrieve data, increasing trust in the system.

In a preferred embodiment of the hardware token transaction unit managing device, each token comprises a monetary value and the local token transaction unit is further configured for generating one or more tokens with a monetary value based on a cash-based monetary value or an account-based monetary value and vice versa.

In a preferred embodiment of the hardware token transaction unit managing device, the device further comprises a user verification unit configured for registering or verifying at least one user.

The user verification unit may represent any unit being configured for registering or verifying at least one user. The term "registering" may represent that a user registers himself for the first time at the user verification unit. During the registration of the user, the user verification unit may query, request and/or ask for a plurality of mandatory and non-mandatory personal information, official documents and/or other mandatory documents for gathering/collecting all/the necessary and needed data from the user to be registered. In this context, the kind or type of mandatory and non-mandatory necessary and needed data from the user to be registered may be provided, defined or specified by a national or international authority like the central bank, but is not limited thereto. For instance, during the registration of the user, the user verification unit may request the user to insert his full name, his birthday, his passport number, his place of residence etc. but is not limited thereto. These data may be provided to the verification unit by a manual input via a touchpad by the user or by a computer-based input e.g. via an artificial intelligence based document scanning and data detection proceeding but is not limited thereto. The received/gathered data of the registration may be stored on the hardware token transaction unit and/or within a data storage, e.g. cache or memory, of the user verification unit. The term "verification" may represent that a user verifies respectively authenticates himself at a further time, i.e. the second time or more, at the user verification unit. For instance, during the verification of the user, the user verification unit provides at least one question, e.g. log-in data and password, to the user but is not limited thereto. When the user replies to this at least one question, the user verification unit checks, matches or correlates the reply of the question to the data stored in the user verification unit or on the hardware token transaction unit. In case the reply of the user matches with the stored data, the verification unit provides access to the user. In case the reply of the user does not match with the stored data, the verification unit denies access to the user. The user verification unit may comprise a data comparison unit. For instance, the user verification unit may be a camera, a proof of identity scanner, and/or a biometric sensor but is not limited thereto. The camera may be any optical instrument used to capture and store images and videos digitally via an electronic image sensor. The camera may comprise a camera system comprising at least one camera and a computing device, in particular a computing device including an artificial intelligence like machine learning algorithm, configured for providing face recognition based on the captured pictures of the at least one camera. The proof of identity scanner may be any device or unit configured for scanning a proof of identity. For instance, a proof of identity may be a passport or an identification card, ID-card, or any other physical element with which the identity of a user can be proofed and identified. The proof of identity can be provided by a governmental agency or by a non-governmental office. Exemplary, a proof of identity may be an official document including a picture, in particular a biometric picture, of the user. The proof of identity scanner may a computing unit comprising an artificial intelligence, in particular a machine learning algorithm, for identifying text or data on the scanned proof of identity. The biometric sensor may represent any device configured for identifying, scanning and/or sensing biometric parameters. For instance, biometric parameters may be the fingerprint, the finger vain, the handprint, and the hand vain but is not limited thereto. Additionally, the user verification unit may comprise a communication unit configured for multifactor or two factor authentication but is not limited thereto.

By including a user verification unit into the hardware token transaction unit managing device, a usage of or an access to the hardware token transaction unit by an unauthorized person can be reliably prevented.

In a preferred embodiment of the hardware token transaction unit managing device, the user verification unit comprises at least one of a camera, a proof of identity scanner, and a biometric sensor.

In a preferred embodiment of the hardware token transaction unit managing device, when the at least one user is registered or verified, the local token transaction unit is further configured for transferring at least one token to a new or used hardware token transaction unit or transferring at least one token from a used hardware token transaction unit.

By providing a transferring of a token to or from the user's hardware token transaction unit only when the at least one user is registered or verified, it can be ensured that no transferring of a token is provided by an unauthorized person. Therefore, the security can be increased.

In a preferred embodiment of the hardware token transaction unit managing device, the device further comprises a cash output unit configured for dispensing cash-based monetary values from the hardware token transaction unit managing device to the at least one user in response to the transferring, preferably modifying or redeeming, of at least one token from the used hardware token transaction unit to the local token transaction unit, and/or a cash input unit configured for receiving cash-based monetary value from the user and in return transferring, preferably by modifying or storing, of at least one token to the new or used hardware token transaction unit as the token-based monetary value from the local token transaction unit, and/or a communication unit configured for receiving account-based monetary value from a user's account and in return transferring, preferably by modifying or storing, of at least one token to the new or used hardware token transaction unit as the token-based monetary value from the local token transaction unit. The communication unit is configured for sending account-based monetary value to a user's account in response to transferring, preferably by modifying or redeeming, of at least one token from the used hardware token transaction unit as the token-based monetary value to the local token transaction unit.

In a preferred embodiment of the hardware token transaction unit managing device, the hardware token transaction input/output is configured for issuing a new hardware token transaction unit to the user, preferably in response to transferring a token-based monetary value as token from the local token transaction unit to the new hardware token transaction unit, and/or the hardware token transaction input/output is configured for receiving a used hardware token transaction unit from the user and in response thereto transferring a token-based monetary value from the used hardware token transaction unit to the local token transaction unit, and/or the hardware token transaction input/output unit is configured for temporarily receiving a used hardware token transaction unit from the user and in response thereto transferring a token-based monetary value from the used hardware token transaction unit to the local token transaction unit or vice versa.

In a preferred embodiment of the hardware token transaction unit managing device, the hardware token transaction unit is a smart card.

In a preferred embodiment of the hardware token transaction unit managing device, the hardware token transaction unit managing device is configured to operate in an offline mode in which a network connection to the transaction system is switched-off or disabled or disconnected, wherein preferably, the hardware token transaction unit managing device is an automated teller machine, ATM.

By configuring the hardware token transaction unit managing device as to operate in an offline mode, the flexibility of usage of the hardware token transaction unit managing device can be significantly increased. For instance, the hardware token transaction unit managing device can be used in regions having a low coverage of electricity, mobile radio or internet connection.

In another aspect of the invention there is provided a method, preferably in a hardware token transaction unit managing device as described above. The method comprises the steps of physical storing, in a hardware token transaction unit storage of a hardware token transaction unit managing device, at least one new and/or used hardware token transaction unit, dispensing, by a hardware token transaction unit input/output of the hardware token transaction unit managing device, a new hardware token transaction unit physically stored in the hardware token transaction unit storage and/or receiving, by the hardware token transaction unit input/output of the hardware token transaction unit managing device, a used hardware token transaction unit, and managing, by a local token transaction unit of the hardware token transaction unit managing device, of one or more tokens of the at least one new or used hardware token transaction unit.

In a preferred embodiment of the method, the method further comprising the step of registering or verifying by a user verification unit at least one user.

In a preferred embodiment of the method, the method further comprising the step of receiving cash-based monetary value from the user or account-based monetary value from a user's account.

In a preferred embodiment of the method, when in the dispensing step, a new hardware token transaction unit physically stored in the hardware token transaction unit storage is dispensed, and when the at least one user is registered and a cash-based monetary value or an account-based monetary value is received, the managing comprises converting by a local token transaction unit the cash-based monetary value or the account-based monetary value into at least one token as token-based monetary value, storing in the local token transaction unit the at least one token as token-based value in the local token transaction unit, and transferring by the local token transaction unit the at least one token as token-based value from the local token transaction unit to the new hardware transaction unit.

In a preferred embodiment of the method, when in the receiving step, a used hardware token transaction unit is received and preferably when the at least one user is verified and a cash-based monetary value or an account-based monetary value is received, the managing comprises converting the cash-based monetary value or the account-based monetary value into at least one token as token-based monetary value for being stored on the used hardware token transaction unit, storing the at least one token as a token-based monetary value in the local token transaction unit, and transferring, the at least one token as token-based value from the local token transaction unit to the used hardware transaction unit. In other words, the at least one token as token-based monetary value is modified on the used hardware token transaction unit.

In a preferred embodiment of the method, the method further comprises, when in the receiving step, a used hardware token transaction unit is received and preferably when the at least one user is verified and a cash-based monetary value or an account-based monetary value is received, converting, by a local token transaction unit, the cash-based monetary value or the account-based monetary value into at least one token as token-based monetary value for being stored on the used hardware token transaction unit; storing, in the local token transaction unit, the at least one token as a token-based monetary value in the local token transaction unit; and transferring, by the local token transaction unit, the at least one token as token-based value from the local token transaction unit to the used hardware transaction unit.

In a preferred embodiment of the method, the method further comprises, when the receiving receives a used hardware token transaction unit and preferably when the at least one user is verified, modifying the at least one token as token-based monetary value on the used hardware token transaction unit, or redeeming the at least one token as token-based monetary value on the used hardware token transaction unit, converting the at least one token as token-based monetary value into a cash-based monetary value or an account-based monetary value, dispensing the token-based monetary value as cash-based monetary value to the user or transferring the token-based monetary value as account-based monetary value to a user's account, and providing the used hardware token transaction unit to the hardware token storage unit.

In a preferred embodiment of the method, the method further comprises, when the receiving receives a used hardware token transaction unit and preferably when the at least one user is verified, modifying, in the hardware token transaction unit managing device, the at least one token as token-based monetary value on the used hardware token transaction unit, or redeeming, in the hardware token transaction unit managing device, the at least one token as token-based monetary value on the used hardware token transaction unit, converting, in the hardware token transaction unit managing device, the at least one token as token-based monetary value into a cash-based monetary value or an account-based monetary value, dispensing, in the hardware token transaction unit managing device, the token-based monetary value as cash-based monetary value to the user or transferring the token-based monetary value as account-based monetary value to a user's account, and providing, in the hardware token transaction unit managing device, the used hardware token transaction unit to the hardware token storage unit.

In a preferred embodiment of the method, the registering or verifying of the at least one user is provided by face recognition, by ID verification, by finger vein verification, and/or by fingerprint verification.

In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.
Fig. 1 shows a box diagram of a hardware token transaction unit managing device.
Fig. 2 shows an external view on a hardware token transaction unit managing device of Fig. 1.
Fig. 3 shows an exemplary embodiment of the method.
Fig. 4 shows a first exemplary embodiment of the method in which a used hardware token transaction unit is received, the token is transferred into its monetary value and issued to the user, and the used hardware token transaction unit is removed.
Fig. 5 shows a second exemplary embodiment of the method in which a token is provided to a new hardware token transaction unit and the new hardware token transaction unit is issued to the user.
Fig. 6 shows a third exemplary embodiment of the method in which a used hardware token transaction unit is received, the token on the used hardware token transaction unit is modified, and the used hardware token transaction unit is issued to the user.

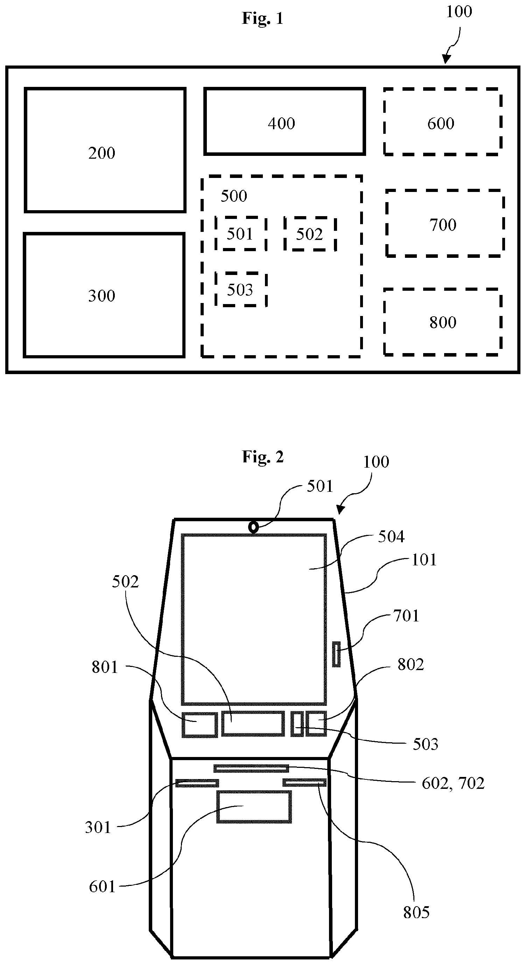

In Fig. 1, a box diagram of a hardware token transaction unit managing device is depicted. The hardware token transaction unit managing device 100 within a token-based electronic transaction system TS comprises a hardware token transaction unit storage 200 configured for physically storing at least one new and/or used hardware token transaction unit, a hardware token transaction unit input/output 300 configured for dispensing a new hardware token transaction unit and/or for receiving a hardware token transaction unit, and a local token transaction unit 400 comprising one or more tokens of the token-based electronic transaction system.

Optionally, the hardware token transaction unit managing device 100 further comprises a user verification unit 500 configured for registering or verifying at least one user.

Optionally, the user verification unit 500 comprises at least one of a camera 501, a proof of identity scanner 502, and a biometric sensor 503.

Optionally, the hardware token transaction unit managing device 100 further comprises a cash output unit 600. The cash out put unit 600 is configured for dispensing cash-based monetary values from the hardware token transaction unit managing device 100 to the at least one user in response to the transferring, preferably modifying or redeeming, of at least one token from the used hardware token transaction unit to the local token transaction unit 400. Additionally or alternatively, the hardware token transaction unit managing device 100 further comprises a cash input unit 700 configured for receiving cash-based monetary value from the user and in return transferring, preferably by modifying or storing, of at least one token to the new or used hardware token transaction unit as the token-based monetary value from the local token transaction unit 400. Additionally or alternatively, the hardware token transaction unit managing device 100 further comprises a communication unit 800 configured for receiving account-based monetary value from a user's account and in return transferring, preferably by modifying or storing, of at least one token to the new or used hardware token transaction unit as the token-based monetary value from the local token transaction unit 400.

The hardware token transaction unit storage 200, the hardware token transaction unit input/output 300, the local token transaction unit 400, the user verification unit 500, the cash output unit 600, the cash input unit 700, and/or the communication unit 800 are directly or indirectly communicatively coupled to each other.

In Fig. 2, an external view on a hardware token transaction unit managing device is depicted. The hardware token transaction unit managing device 100 is an ATM. The hardware token transaction unit managing device 100 comprises a housing 101, in which the units as depicted in Fig. 1 are arranged. The user verification unit 500 comprises respectively is directly or indirectly communicatively connected to a camera 501, to a proof of identity scanner 502 like an ID or passport scanner respectively reader, to a biometric sensor 503 like a finger vain scanner or fingerprint scanner, and to a touch screen 504. The hardware token transaction unit input/ output 300 comprises respectively is directly or indirectly communicatively connected to a hardware token transaction unit feeder and/or dispenser 301. The cash output unit 600 comprises respectively is directly or indirectly communicatively connected to the coin dispenser 601 and to the cash dispenser 602. The cash input unit 700 comprises respectively is directly or indirectly communicatively connected to the coin feeder 701 and to the cash feeder 702. The communication unit 800 comprises respectively is directly or indirectly communicatively connected to the QR code reader 801 and the NFC reader 802.

Optionally, the hardware token transaction unit managing device 100 comprises a paper receipt dispenser 805 configured for providing a receipt to the user which is for the users documentation of transactions.

Optionally, the hardware token transaction unit managing device 100 is floor mounted with a secure vault, an alarm and a position locator in order to ensure the safety of the hardware token transaction unit managing device 100.

The local token transaction unit 400 may be referred to as a wallet, which is a digital container that stores information used to make payments, redeem rewards, or access other services. The local token transaction unit 400 can be used to locally manage the token itself, to modify the tokens and to register the token in the electronic transaction system, e.g. by generating and sending replacement requests to a token reference register within the electronic transaction unit.

The local token transaction unit 400 can be software-based or hardware-based and can be used to store a variety of information, including tokens, asset values, and other relevant data. The local token transaction unit 400 can be implemented as a software application, or as a hardware device, such as a USB drive or a smartcard / chipcard within the hardware token transaction unit managing device 100.

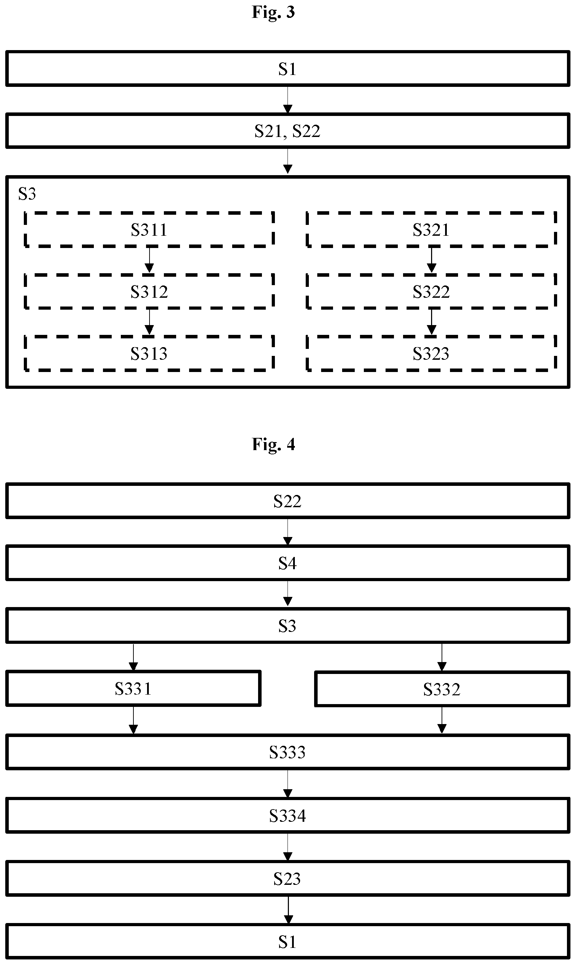

In Fig. 3, an exemplary embodiment of the method is depicted. In a first step S1 of the method at least one new and/or used hardware token transaction unit is physically stored in a hardware token transaction unit storage 200 of a hardware token transaction unit managing device 100. In a second step S21 and/or S22, a new hardware token transaction unit physically stored in the hardware token transaction unit storage 200 is dispensed and/or a used hardware token transaction unit is received by a hardware token transaction unit input/output 300 of the hardware token transaction unit managing device 100. In a third step S3 of the method, one or more tokens of the at least one new or used hardware token transaction unit are managed by a local token transaction unit 400 of the hardware token transaction unit managing device 100.

Optionally, when the dispensing S21 dispenses a new hardware token transaction unit physically stored in the hardware token transaction unit storage 200 and when the at least one user is registered and a cash-based monetary value or an account-based monetary value is received, the managing step S3 comprises the sub steps of converting S311 the cash-based monetary value or the account-based monetary value into at least one token as token-based monetary value, storing S312 the at least one token as token-based value in the local token transaction unit 400, and transferring S313 the at least one token as token-based value from the local token transaction unit to the new hardware transaction unit. The converting step S311, the storing step S312, and the transferring step S313 are executed by or in the local token transaction unit 400.

Optionally, when the receiving S22 receives a used hardware token transaction unit and preferably when the at least one user is verified and a cash-based monetary value or an account-based monetary value is received, the managing step S3 comprises the substeps of converting S321 the cash-based monetary value or the account-based monetary value into at least one token as token-based monetary value for being stored on the used hardware token transaction unit, storing S322 the at least one token as a token-based monetary value in the local token transaction unit, and transferring S323 the at least one token as token-based value from the local token transaction unit to the used hardware transaction unit.The converting step S321, the storing step S332, and the transferring step S323 are executed by or in the local token transaction unit 400.

In Fig. 4, a first exemplary embodiment of the method, in which a used hardware token transaction unit is received, the token is transferred into its monetary value and issued to the user, and the used hardware token transaction unit is removed, is depicted.

In a first step S22 of Fig. 4, a used hardware token transaction unit is received by the hardware token transaction unit input/output 200 of the hardware token transaction unit managing device 100.

In a second step S4 of Fig. 4, at least one user is verified by a user verification unit 500, e.g. as described in Figs. 1 and 2.

In a third step S3 of Fig. 4, one or more tokens of the at least one used hardware token transaction unit are managed by a local token transaction unit 400 of the hardware token transaction unit managing device 100.

In a fourth step S331 of Fig. 4, when a used hardware token transaction unit is received and when the at least one user is verified, the at least one token as token-based monetary value on the used hardware token transaction unit is modified, such as merge-, split,- or switch-function as above referenced. Alternatively, in a fourth step S332 of Fig. 4, when a used hardware token transaction unit is received and when the at least one user is verified, the at least one token as token-based monetary value on the used hardware token transaction unit is redeemed. Both the modification and the redeeming of the at least one token as token-based monetary value on the used hardware token transaction unit are provided by the hardware token transaction unit managing device 100.

In a fifth step S333 of Fig. 4, the at least one token as token-based monetary value is converted into a cash-based monetary value or an account-based monetary value. The conversion of the at least one token as token-based monetary value is provided by the hardware token transaction unit managing device 100.

In a sixth step S334 of Fig. 4, the token-based monetary value as cash-based monetary value is dispensed to the user or the token-based monetary value as account-based monetary value is transferred to a user's account. The dispersion of the token-based monetary value as cash-based monetary value to the user is provided by the hardware token transaction unit managing device 100.

In a seventh step S23 of Fig. 4, the used hardware token transaction unit is provided to the hardware token storage unit 200.

In an eighth step S1, the used hardware token transaction unit is physically stored in a hardware token transaction unit storage 200 of a hardware token transaction unit managing device 100, e.g. for later destroying or for re-use as a new hardware token transaction unit.

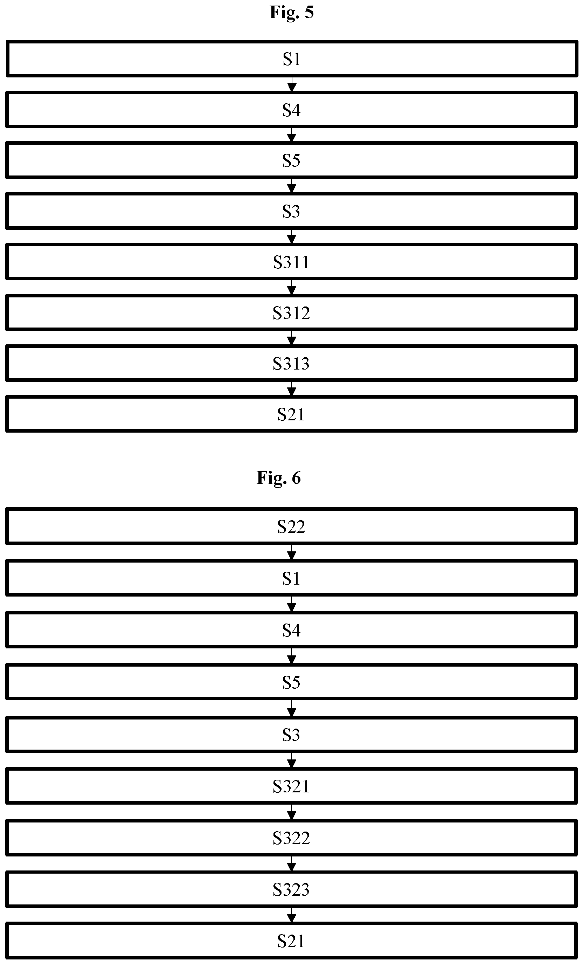

In Fig. 5, a second exemplary embodiment of the method, in which a token is provided to a new hardware token transaction unit and the new hardware token transaction unit is issued to the user, is depicted.

In a first step S1 of the first exemplary embodiment of the method, at least one new hardware token transaction unit is physically stored in a hardware token transaction unit storage 200 of a hardware token transaction unit managing device 100.

In a second step S4 of Fig. 5, at least one user is registered by a verification unit 500, e.g. the verification unit of Figs. 1 and 2.

In a third step S5 of Fig. 5, a cash-based monetary value is received from the user or account-based monetary value is received from a user's account.

In a fourth step S3 of Fig. 5, one or more tokens of the at least one new hardware token transaction unit are managed by a local token transaction unit 400 of the hardware token transaction unit managing device 100.

In a fifth step S311 of Fig. 5, when a new hardware token transaction unit is dispensed to the user, the at least one user is registered and a cash-based monetary value or an account-based monetary value is received, the cash-based monetary value or the account-based monetary value is transferred into at least one token as token-based monetary value. The fifth step S311, i.e. the conversion, is provided by the local token transaction unit 400.

In a sixth step S312 of Fig. 5, the at least one token as token-based monetary value is (temporarily) stored in the local token transaction unit 400. The sixth step S312, i.e. the storing, is provided by the local token transaction unit 400.

In a seventh step S313, the at least one token (with token-based monetary value) is transferred from the local token transaction unit 400 to the new hardware transaction unit stored in the hardware token transaction unit storage 200. The seventh step S313, i.e. the transferring, is provided by the local token transaction unit 400.

In an eight step S21, the new hardware token transaction unit is dispensed to the user by a hardware token transaction unit input/ output 300 of the hardware token transaction unit managing device 100.

In Fig. 6, a third exemplary embodiment of the method, in which a used hardware token transaction unit is received, the token on the used hardware token transaction unit is modified, and the used hardware token transaction unit is issued back to the user, is depicted.

In a first step S22 of Fig. 6, a used hardware token transaction unit is received by the hardware token transaction unit input/output 200 of the hardware token transaction unit managing device 100.

In a second step S1 of Fig. 6, the at least one used hardware token transaction unit is temporarily held in the hardware token transaction unit input/ output or physically stored in a hardware token transaction unit storage 200 of a hardware token transaction unit managing device 100.

In a third step S4 of Fig. 6, at least one user is verified by a user verification unit 500.

In a fourth step S5 of Fig. 6, a cash-based monetary value is received from the user or account-based monetary value is received from a user's account.

In a fifth step S3 of Fig. 6, one or more tokens of the at least one used hardware token transaction unit are managed by a local token transaction unit 400 of the hardware token transaction unit managing device 100.

In a sixth step S321, when a used hardware token transaction unit is received, the at least one user is verified and a cash-based monetary value or an account-based monetary value is received, the cash-based monetary value or the account-based monetary value is converted by the local transaction unit 400 into at least one token as token-based monetary value for being stored on the used hardware token transaction unit.

In a seventh step , the at least one token as token-based monetary value may be modified on the used hardware token transaction unit by the local token transaction unit (400). The modification may include that a token having a value m may be split or merged and the modified token having the value m-n or m+n is kept. The resulting new token may be transferred to another token transaction unit. The transferred token may be deleted at the sender of the token, but is not limited thereto.

In a preferred seventh step S322, the at least one token as a token-based monetary value is stored, in the local token transaction unit (400). The storing is provided in the local token transaction unit 400.

In an eight step S323, the at least one token as token-based value is transferred, by the local token transaction unit 400, from the local token transaction unit 400 to the used hardware transaction unit.

In a nineth step S21, the used hardware token transaction unit is dispensed back to the user by a hardware token transaction unit input/output 300 of the hardware token transaction unit managing device 100.

### REFERENCE SIGNS

- 100: Hardware token transaction unit managing device
- 101: Housing
- 200: Hardware token transaction unit storage
- 300: Hardware token transaction unit input/output
- 301: Hardware token transaction unit dispenser/feeder
- 400: Local token transaction unit
- 500: User verification unit
- 501: Camera
- 502: Proof of identity scanner
- 503: Biometric sensor
- 504: Touch screen
- 600: Cash output unit
- 601: Coin dispenser
- 602: Cash dispenser
- 700: Cash input unit
- 701: Coin feeder
- 702: Cash feeder
- 800: Communication unit
- 801: QR code reader
- 802: NFC reader
- 805: Paper receipt dispenser
- S1: Physically storing step
- S21: Dispensing step
- S22: Receiving step
- S23: Providing step
- S3: Managing step
- S311: Transferring step
- S312: Token storing step
- S313: Token transferring step
- S321: Transferring step
- S322: Modifying step
- S331: Modifying token step
- S332: Redemption token step
- S333: Transferring step
- S334: Dispensing/transferring step
- S4: Verifying step
- S5: Money receiving step

## Claims

1. A hardware token transaction unit managing device (100) within a token-based electronic transaction system (TS), comprising:
a hardware token transaction unit storage (200) configured for physically storing at least one new and/or used hardware token transaction unit;
a hardware token transaction unit input/ output (300) configured for dispensing a new hardware token transaction unit and/or for receiving a used hardware token transaction unit; and
a local token transaction unit (400) comprising one or more tokens of the token-based electronic transaction system, the local token transaction unit (400) configured for managing of one or more tokens of the at least one new or used hardware token transaction unit.

2. The hardware token transaction unit managing device (100) according to claim 1, wherein each token comprises a monetary value and wherein the local token transaction unit (400) is further configured for generating one or more tokens with a monetary value based on a cash-based monetary value or an account-based monetary value and vice versa.

3. The hardware token transaction unit managing device (100) according to any one of the preceding claims, further comprising a user verification unit (500) configured for registering or verifying at least one user.

4. The hardware token transaction unit managing device (100) according to claim 3, wherein the user verification unit (500) comprises at least one of a camera (501), a proof of identity scanner (502), and a biometric sensor (503).

5. The hardware token transaction unit managing device (100) according to any one of claims 3 or 4, wherein, when the at least one user is registered or verified, the local token transaction unit (400) is further configured for transferring at least one token to a new or used hardware token transaction unit or transferring at least one token from a used hardware token transaction unit.

6. The hardware token transaction unit managing device (100) according to any preceding claims, further comprising:
a cash output unit (600) configured for dispensing cash-based monetary values from the hardware token transaction unit managing device (100) to the at least one user in response to the transferring, preferably modifying or redeeming, of at least one token from the used hardware token transaction unit to the local token transaction unit (400), and/or
a cash input unit (700) configured for receiving cash-based monetary value from the user and in return transferring, preferably by modifying or storing, of at least one token to the new or used hardware token transaction unit as the token-based monetary value from the local token transaction unit (400); and/ or
a communication unit (800) configured for receiving account-based monetary value from a user's account and in return transferring, preferably by modifying or storing, of at least one token to the new or used hardware token transaction unit as the token-based monetary value from the local token transaction unit (400);
wherein the communication unit (800) is configured for sending account-based monetary value to a user's account in response to transferring, preferably by modifying or redeeming, of at least one token from the used hardware token transaction unit as the token-based monetary value to the local token transaction unit (400).

7. The hardware token transaction unit managing device (100) according to any preceding claims, wherein
the hardware token transaction input/ output (300) is configured for issuing a new hardware token transaction unit to the user, preferably in response to transferring a token-based monetary value as token from the local token transaction unit (400) to the new hardware token transaction unit; and/or
the hardware token transaction input/ output (300) is configured for receiving a used hardware token transaction unit from the user and in response thereto transferring a token-based monetary value from the used hardware token transaction unit to the local token transaction unit (400); and/or
the hardware token transaction input/output unit (300) is configured for temporarily receiving a used hardware token transaction unit from the user and in response thereto transferring a token-based monetary value from used the hardware token transaction unit to the local token transaction unit (400) or vice versa.

8. The hardware token transaction unit managing device (100) according to any preceding claims, wherein the hardware token transaction unit is a smart card.

9. The hardware token transaction unit managing device (100) according to any preceding claims, wherein the hardware token transaction unit managing device (100) is configured to operate in an offline mode in which a network connection to the transaction system (TS) is switched-off or disabled or disconnected, wherein preferably, the hardware token transaction unit managing device (100) is an automated teller machine, ATM.

10. A method, preferably in a hardware token transaction unit managing device (100) according to claims 1 to 9, the method comprising:
physical storing (S1), in a hardware token transaction unit storage (200) of a hardware token transaction unit managing device (100), at least one new and/or old hardware token transaction unit;
dispensing (S21), by a hardware token transaction unit input/output (300) of the hardware token transaction unit managing device (100), a new hardware token transaction unit physically stored in the hardware token transaction unit storage (200) and/or receiving (S22), by the hardware token transaction unit input/output (200) of the hardware token transaction unit managing device (100), a used hardware token transaction unit;
managing (S3), by a local token transaction unit (400) of the hardware token transaction unit managing device (100), of one or more tokens of the at least one new or used hardware token transaction unit.

11. The method according to claim 10, further comprising:
registering or verifying (S4) by a user verification unit (500) at least one user.

12. The method according to claims 10 or 11, further comprising:
receiving (S5) cash-based monetary value from the user or account-based monetary value from a user's account.

13. The method according to claims 11 and 12,
wherein, when in the dispensing (S21) step, a new hardware token transaction unit physically stored in the hardware token transaction unit storage (200) is dispensed and when the at least one user is registered, and a cash-based monetary value or an account-based monetary value is received, the managing (S3) comprises:
converting (S311), by the local token transaction unit (400), the cash-based monetary value or the account-based monetary value into at least one token as token-based monetary value;
storing (S312), in the local token transaction unit (400), the at least one token as token-based value in the local token transaction unit (400); and
transferring (S313), by the local token transaction unit (400), the at least one token as token-based value from the local token transaction unit (400) to the new hardware transaction unit.

14. The method according to claims 11 and 12,
wherein, when in the receiving (S22) step, a used hardware token transaction unit is received and preferably when the at least one user is verified and a cash-based monetary value or an account-based monetary value is received, the managing (S3) comprises:
converting (S321), by the local token transaction unit (400), the cash-based monetary value or the account-based monetary value into at least one token as token-based monetary value for being stored on the used hardware token transaction unit;
storing (S322), in the local token transaction unit (400), the at least one token as a token-based monetary value in the local token transaction unit (400); and
transferring (S323), by the local token transaction unit (400), the at least one token as token-based value from the local token transaction unit (400) to the used hardware transaction unit.

15. The method according to claims 11 and 12, the method further comprises, when in the receiving step (S22), a used hardware token transaction unit is received and preferably when the at least one user is verified,
modifying (S331), by the hardware token transaction unit managing device (100), the at least one token as token-based monetary value on the used hardware token transaction unit; or
redeeming (S332), by the hardware token transaction unit managing device (100), the at least one token as token-based monetary value on the used hardware token transaction unit;
converting (S333), by the hardware token transaction unit managing device (100), the at least one token as token-based monetary value into a cash-based monetary value or an account-based monetary value; and
dispensing (S334), by the hardware token transaction unit managing device (100), the token-based monetary value as cash-based monetary value to the user or converting the token-based monetary value as account-based monetary value to a user's account; and
providing (S23), by the hardware token transaction unit managing device (100), the used hardware token transaction unit to the hardware token storage unit (200).

16. The method according to any one of the claims 11 to 13, wherein the registering or verifying of the at least one user is provided by face recognition, by ID verification, by finger vein verification, and/or by fingerprint verification.
